(19) **Europäisches Patentamt / European Patent Office / Office européen des brevets**

(11) **EP 3 629 521 B1**

(12) # EUROPEAN PATENT SPECIFICATION

(45) Date of publication and mention
of the grant of the patent:
**12.05.2021 Bulletin 2021/19**

(51) Int Cl.:
*H04L 12/24* (2006.01)    *H04L 29/12* (2006.01)
*H04L 12/26* (2006.01)    *H04L 29/08* (2006.01)

(21) Application number: **18918414.6**

(86) International application number:
**PCT/CN2018/107474**

(22) Date of filing: **26.09.2018**

(87) International publication number:
**WO 2020/019472 (30.01.2020 Gazette 2020/05)**

(54) **RATING METHOD FOR SERVICE NODE, DOMAIN NAME SYSTEM (DNS) SCHEDULING METHOD AND SERVER**

BEWERTUNGSVERFAHREN FÜR DIENSTKNOTEN, DOMÄNENNAMENSYSTEM(DNS)-PLANUNGSVERFAHREN UND SERVER

PROCÉDÉ D'ÉVALUATION DE NOEUD DE SERVICE, PROCÉDÉ DE PLANIFICATION DE SYSTÈME DE NOMS DE DOMAINE (DNS), ET SERVEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2018 CN 201810816718**

(43) Date of publication of application:
**01.04.2020 Bulletin 2020/14**

(73) Proprietor: **Wangsu Science & Technology Co., Ltd.**
**Shanghai 200030 (CN)**

(72) Inventor: **HUANG, Zhixian**
**Shanghai 200030 (CN)**

(74) Representative: **de Arpe Fernandez, Manuel et al**
**Arpe Patentes y Marcas**
**Alcalá, 26, 5ª Planta**
**28014 Madrid (ES)**

(56) References cited:
**EP-A1- 2 356 577          CN-A- 103 945 198**
**CN-B- 103 945 198        US-A1- 2010 088 405**
**US-A1- 2017 134 253     US-A1- 2018 026 938**

**Description**

FIELD OF DISCLOSURE

The present disclosure generally relates to the field of Internet technology and, more particularly, relates to a method for scoring a service node, and a method and server for scheduling a domain name system.

BACKGROUND

The Domain Name System (DNS) is a distributed database of domain names. It is the core service of the basic resources of the Internet. It is mainly used to carry the conversion between the IP addresses and the Internet domain names, which makes it easier and faster for people to access the Internet. When a user initiates a domain name parsing request in the browser of a terminal, the terminal calls a parser to perform a DNS query, and the parser sends the DNS query request to a domain name server. The domain name server queries the resource record in the domain name space to obtain the corresponding source station service node, and returns the address information of the source station service node to the parser, which then returns the eventual result to the terminal.

Content Delivery Network (CDN) is a concept proposed in response to the complex network architecture. It is a network traffic distribution/scheduling system derived from DNS that aims to improve the speed and quality of Internet access. The main principle of CDN is to redirect a user's request to a source station service node closest to the user based on the comprehensive real-time information including the network traffic, and the connection, load status, distance to the user, and response time of each source station service node, etc., so as to avoid, as much as possible, the bottlenecks and links on the Internet that may affect the speed and stability of data transmission, thereby making the transmission of content faster and more stable.

However, in the course of long-term research and development, the applicant of the present disclosure has found that the existing technologies have at least the following problems:

The existing CDN scheduling systems mainly rely on static policies. By pre-deploying nodes across various sites over the network, a layer of new intelligent virtual network is formed, and a series of DNS mapping data tables are constructed to distinguish domain name route coverage in different regions. Eventually, a user access is directed to a corresponding node based on these DNS mapping data tables, to facilitate traffic routing and acceleration processing. However, these DNS mapping data tables are pre-set and strictly divided according to the territory of operators. Therefore, the data received by each node is a relatively stable static configuration. In addition, the scheduling system may not determine the availability of each node. Further, the resources may not back up each other between different nodes, and thus the flexibility is really poor. Accordingly, it is really difficult to achieve a rational resource allocation. In addition, there may be cases where an unavailable node is scheduled or the network traffic is unevenly distributed.

Moreover, in the existing technologies, there are also cases where the mixed CDN scheduling (i.e., a content provider uses a plurality of CDN service providers to provide services) exists. The mixed CDN scheduling service requires a scheduling system to select, schedule, and switch among a plurality of CDN service providers, to eventually obtain the resource with the optimal quality. This requires the scheduling system to have relatively comprehensive monitoring and scheduling mechanisms that can monitor the state of each CDN in real time, and switch to or add another CDN service when a certain CDN service is unavailable or overloaded. This means a huge investment in technologies and resources.

The document US 2018/0026938 A1 discloses Content Delivery Network (CDN) detection processing and scheduling methods.

The document US 2010/088405 A1 discloses a method of charting a content distribution system which involves identifying a set of DNS servers that may be used as vantage points to test delay performance to a CDNs content server.

The document US 2017/134253 A1 discloses a method and a device for selecting a content delivery network node.

BRIEF SUMMARY OF THE DISCLOSURE

The objective of the present disclosure is to provide a method and server for scoring a service node, to identify a service node with high quality, thereby providing a basis for implementing a rational resource allocation.

To solve the above technical problems, the implementations of the present disclosure provide a method for scoring a service node and a server according to the claims. Further optional features are provided in accordance with the dependent claims.

## BRIEF DESCRIPTION OF THE DRAWINGS

One or more implementations are to-be-exemplified with reference to the figures in the accompanying drawings. The exemplary illustration should not be constructed as limiting the implementations. In the accompanying drawing, elements with like reference numbers indicate like elements. Unless specifically specified, the figures in the accompanying drawings do not constitute a limitation on ratios of the drawings.

FIG. 1 is a processing flow of a method for scoring a service node according to Implementation 1 of the present disclosure;

FIG. 2 is a flowchart of a method for scheduling a domain name according to Implementation 2 of the present disclosure; and

FIG. 3 is a schematic diagram of a server according to Implementation 4 of the present disclosure.

## DETAILED DESCRIPTION

To make the objective, technical solutions, and advantages of the implementations of the present disclosure clearer, each implementation of the present disclosure will be made in detail hereinafter with reference to the accompanying drawings. A person skilled in the art may understand that, to make the people to better understand the present disclosure, a lot of technical details are provided in the various implementations of the present disclosure. However, even without these technical details or the various modifications or deviations based on each of the following implementations, the technical solutions that the present disclosure seeks for protection may still be implemented.

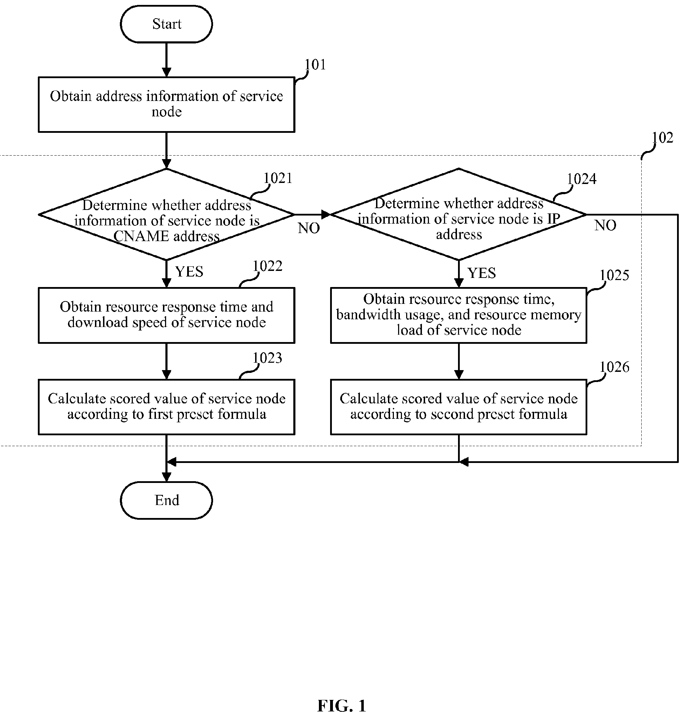

Implementation 1 of the present disclosure relates to a method for scoring a service node, and a specific processing flow is shown in FIG. 1. The method for scoring a service node in the disclosed implementation is implemented on a server, which may be referred to as a "resource scoring center" hereinafter. The implementation steps of the scoring method in the disclosed implementation are as follows:

Step 101: Acquire address information of a service node.

Specifically, a service node may be a source station service node or an acceleration service node. The technical staff sends the address information of a to-be-scored service node to the resource scoring center. Here, the address information of the service node may be an IP address, or a CNAME address.

Step 102: Monitor the service node according to the address information of the service node, to obtain a plurality of performance evaluation information of the service node, and score the service node according to the plurality of performance evaluation information.

Specifically, the resource scoring center may control one or more monitoring machines to perform real-time monitoring and detection on the service node. That is, each monitoring machine may monitor a plurality of performance of the service node, to obtain a plurality of performance evaluation information of the service node. In this way, the resource scoring center may score the service node according to the plurality of performance evaluation information of the service node obtained by each monitoring machine.

The specific implementation of Step 102 in the disclosed implementation is described hereinafter by way of example. Step 102 includes Sub-Step 1021 to Sub-Step 1026, which are specifically as follows.

Sub-Step 1021: Determine whether the address information of the service node is a CNAME address; if the address information of the service node is a CNAME address, proceed to Sub-Step 1022; and if the address information of the service node is not a CNAME address, proceed to Sub-Step 1024.

Specifically, if the address information of the service node is a domain name, such as the domain name of a certain CDN service provider, the result of the determination in Sub-Step 1021 is YES. If the address information of the service node is an IP address, the result of the determination in Sub-Step 1021 is NO.

**[0021]** Sub-step 1022: Obtain resource response time and a download speed of the service node.

Specifically, the resource scoring center may control one or more monitoring machines to perform real-time monitoring and detection on the service node. For example, the resource scoring center controls the monitoring machine(s) to perform a network diagnostic PING (Packet Internet Groper) monitoring on the service node to obtain the download speed of the service node, and perform DNS monitoring on the service node to obtain the resource response time of the service node.

More specifically, the technical staff may pre-set the detection frequency of the monitoring machine(s) in the resource scoring center in advance, to allow the resource scoring center to control the monitoring machine(s) to obtain more accurate and representative data. For example, the detection frequency may be 2 minutes/once.

Sub-Step 1023: Calculate a scored value of the service node according to a first preset formula.

Specifically, the first preset formula is pre-entered by the technical staff and saved to the resource scoring center. In the disclosed implementation, the first preset formula is: $T = (t_0/t) * (v/v_0)$, where T is the scored value, t is the resource response time, $t_0$ is the preset resource response time, v is the download speed, and vo is the preset download speed. For example, the resource scoring center controls a monitoring machine to perform real-time monitoring and detection on the service node. The values detected by the monitoring machine are: t is 40 ms, v is 2500 k/s, preset $t_0$ is 100 ms, vo is 1250 k/s, then T = (100/40)*(2500/1250) = 5.

It should be noted that if the resource scoring center controls a plurality of monitoring machines to perform real-time monitoring and detection on the service node, the scored value of the service node is the mean of Ts. For example, the resource scoring center controls two monitoring machines to perform real-time monitoring and detection on the service node. The values detected by one monitoring machine are: t is 40 ms, v is 2500 k/s, and the values detected by the other monitoring machine are: t is 60 ms, and v is 2000k/s. The preset $t_0$ is 100 ms, $v_0$ is 1250 k/s, then T = ((100/40)*(2500/1250)+(60/40)*(2000/1250))/2 = (5+2.67)/2 = 3.84.

Sub-Step 1024: Determine whether the address information of the service node is an IP address; if the address information of the service node is an IP address, proceed to Sub-Step 1025, and if the address information of the service node is not an IP address, end the process.

Sub-Step 1025: Obtain resource response time, bandwidth usage, and resource memory load of the service node.

Specifically, the resource scoring center may control one or more monitoring machines to perform real-time monitoring and detection on the service node. For example, the resource scoring center may control the monitoring machine(s) to perform a network diagnostic PING monitoring on the service node to obtain the download speed of the service node, perform a port monitoring on the service node to obtain the bandwidth usage of the service node, and perform a server performance monitoring on the service node to obtain the resource memory load.

More specifically, the implementation that the resource scoring center controls the monitoring machine(s) to perform a server performance monitoring on the service node to obtain the resource memory load may be specifically as follow: the resource scoring center controls the monitoring machine(s) to obtain the CPU usage, memory usage, and disk occupancy of the service node, and calculates the resource memory load of the service node based on the formula:

$z = \sqrt[3]{(aA_1)(bA_2)(cA_3)}$, where z is the resource memory load, $A_1$ is the CPU usage, $A_2$ is the memory usage, $A_3$ is the disk occupancy, a is a preset weight of the CPU usage, b is a preset weight of the memory usage, and c is a preset weight of the disk occupancy.

For example, assume that a, b, and c are all 1, the CPU usage of the service node obtained by the monitoring machine(s) is 40%, the memory usage is 40%, and the disk occupancy is 40%, then $z = \sqrt[3]{(40\%)(40\%)(40\%)}$.

It should be noted that the formula for calculating the resource memory load in the disclosed implementation is: $z = \sqrt[3]{(aA_1)(bA_2)(cA_3)}$. In real applications, the plurality of performance evaluation information of the service node obtained by the resource scoring center is not limited to the resource response time, the bandwidth usage, and the resource memory load. The technical staff may make certain deformations to the formula for calculating the resource memory load. For example, the formula for calculating the resource memory load may be transformed into

$z = \sqrt[m]{(aA_1)(bA_2)\ldots(xA_n)}$, where $A_1$ to $A_n$ represent specific numerical values of each performance evaluation information, m represents the number of performance evaluation information obtained by the resource scoring center, and x represents a preset weight for the performance evaluation information $A_n$.

Sub-Step 1026: Calculate a scored value of the service node according to a second preset formula.

Specifically, the second preset formula is pre-entered by the technical staff and saved to the resource scoring center. In the disclosed implementation, the second preset formula is: $T = (t_0 / t)*(n / n_0)*(z / z_0)$, where T is the scored value, t is the resource response time, $t_0$ is the preset resource response time, n is the bandwidth usage, and no is the preset bandwidth usage, z is the resource memory load, and zo is the preset resource memory load. For example, the resource scoring center controls a monitoring machine to perform real-time monitoring and detection on the service node. The values detected by the monitoring machine are: t is 50 ms, n is 40%, z is $\sqrt[3]{(40\%)(40\%)(40\%)}$, the preset $t_0$ is 200 ms, no is 80%, zo is 80%, then

$$T = \frac{200\,\text{ms}}{50\,\text{ms}} * \frac{80\%}{40\%} * \frac{80\%}{\sqrt[3]{40\%*40\%*40\%}} = 16.$$

More specifically, if the resource scoring center controls a plurality of monitoring machines to perform real-time monitoring and detection on the service node, the scored value of the service node is the mean of Ts. For example, the resource scoring center controls two monitoring machines to perform real-time monitoring and detection on the service nodes. The values detected by one monitoring machine are: t is 50 ms, n is 40%, z is $\sqrt[3]{(40\%)*(40\%)*(40\%)}$,

and the values detected by the other monitoring machine are: t is 60 ms, n is 60%, z is $\sqrt[3]{(50\%)*(50\%)*(50\%)}$, then T = (16+8.53)/2 = 12.27.

It should be noted that the foregoing description of Step 102 is merely an exemplary description provided for the convenience of understanding. The disclosed implementations do not put any limitation on the performance evaluation information and the specific implementation form of scoring the service node according to the performance evaluation information. In real applications, the technical staff may set the specific implementation form of the performance evaluation information and the specific implementation form of scoring the service node according to actual needs.

Compared with the existing technologies, the implementations of the present disclosure provide a method for scoring a service node, which monitors the service node according to the obtained address information of the service node, so as to obtain a plurality of performance evaluation information of the service node, to score the service node. In this way, the score of a service node may directly reflect information including whether the service node is available, whether the service node is a service node with high quality, etc., which provides a basis for implementing a rational resource allocation.

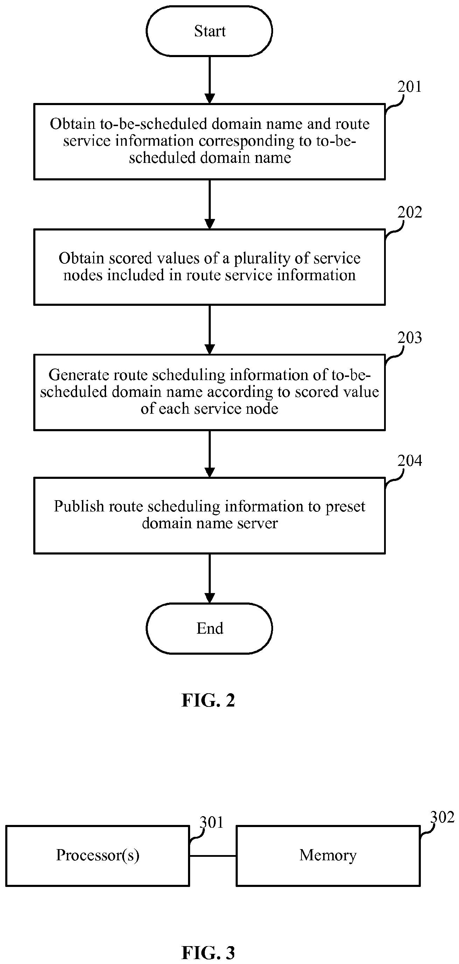

Implementation 2 of the present disclosure relates to a method for scheduling a domain name system. The specific flowchart is shown in FIG. 2. Implementation 2 of the present disclosure needs to call the method for scoring a service node in Implementation 1, so as to generate route scheduling information of a certain domain name. In the disclosed implementation, the method for scheduling a domain name system is implemented on a server, which may be referred to as a "scheduling decision center". The steps of the method for scheduling a domain name system in the disclosed implementation are specifically as follows:

Step 201: Obtain a to-be-scheduled domain name, and route service information corresponding to the to-be-scheduled domain name.

Specifically, the technical staff sends the to-be-scheduled domain name and the route service information corresponding to the to-be-scheduled domain name to the scheduling decision center. The route service information includes at least address information of a plurality of service nodes, where a service node may be a source station service node. For example, the address information of a service node may be an IP address.

More specifically, the route service information may include additional information such as a geographic location, an Internet service provider for each service node, etc. For example, the to-be-scheduled domain name and the route service information corresponding to the to-be-scheduled domain name obtained by the scheduling decision center may be as shown in the following Example 1:

Example 1: The to-be-scheduled domain name is test.example.com, and the route service information is as follows:

| Internet Service Provider | Geographic Location | Address Information (IP) of the Source Station Service Node |
|---|---|---|
| Default | Default | 1.1.1.1 |
| Fujian Telecom | Fujian | 2.1.1.1 |
| Shanghai Mobile | Shanghai | 3.1.1.1 |
| Beijing Unicom | Beijing | 4.1.1.1 |

Step 202: Obtain scored values of a plurality of service nodes included in the route service information.

Specifically, the scheduling decision center sends the address information of the plurality of service nodes included in the route service information to the resource scoring center in Implementation 1, so that the resource scoring center scores the plurality of service nodes included in the route service information, and return a scored value of each service node to the scheduling decision center.

Step 203: Generate route scheduling information of the to-be-scheduled domain name according to the scored value of each service node.

Specifically, the scheduling decision center may rank each of the plurality of service nodes according to the scored values, and generate the route scheduling information of the to-be-scheduled domain name according to the result of ranking. For example, the technical staff may configure route filtering criteria in the scheduling decision center in advance. The route filtering criteria may be that: the scored value of a service node is greater than a preset threshold. In this way, the scheduling decision center may filter out certain faulty routes or heavily loaded routes, so that the route scheduling information may be generated based on the service nodes with relatively high quality. For example, the scheduling decision center may rank the service nodes that satisfy the route filtering criteria (i.e., the scored value of a service node is greater than the preset threshold) according to the scored values, so as to generate the route scheduling information of the to-be-scheduled domain name according to the result of ranking.

It should be noted that the route filtering criteria may be also that: the type of Internet service provider is a preset type. For example, if the preset type is China Telecom, all the service nodes whose Internet service provider is Fujian Telecom satisfy the route filtering criteria. In this way, the scheduling decision center may rank the service nodes, whose Internet service provider belongs to China Telecom, according to the scored values, so as to generate the route scheduling information of the to-be-scheduled domain name according to the result of ranking.

For ease of understanding, the specific implementation of Step 203 in the disclosed implementation is illustrated in the following by way of example. However, the following description is merely for illustrative purpose, and the specific implementation form of Step 203 is not limited to the disclosed implementation.

The to-be-scheduled domain name is test.example.com, and the route service information is as shown in Table 1:

Assume that two monitoring machines Node1 and Node2 are deployed, and the detection data for each source station service node is as follows:

| Address Information (IP) | Monitoring Machine | Response Time | Bandwidth Usage | CPU Usage | Memory Usage | Disk Occupancy |
|---|---|---|---|---|---|---|
| 1.1.1.1 | Node1 | 50 ms | 40% | 40% | 40% | 40% |
|  | Node2 | 60 ms | 50% | 50% | 50% | 50% |
| 2.1.1.1 | Node1 | 100 ms | 50% | 50% | 50% | 50% |
|  | Node2 | 120 ms | 60% | 60% | 60% | 60% |
| 3.1.1.1 | Node1 | 200 ms | 60% | 60% | 60% | 60% |
|  | Node2 | 250 ms | 70% | 70% | 70% | 70% |
| 4.1.1.1 | Node1 | 500 ms | 80% | 80% | 80% | 80% |
|  | Node2 | 500 ms | 90% | 90% | 90% | 90% |

If the preset to is 200 ms, no is 80%, zo is 80%, the preset weight of the CPU usage, the preset weight of the memory usage, and the preset weight of the disk occupancy are all 1, then the scoring table for each source station service node is as follows:

| Address Information (IP) | Monitoring Machine | Score | Final Score |
|---|---|---|---|
| 1.1.1.1 | Node1 | 16.00 | 12.27 |
|  | Node2 | 8.53 |  |
| 2.1.1.1 | Node1 | 5.12 | 4.04 |
|  | Node2 | 2.96 |  |
| 3.1.1.1 | Node1 | 1.78 | 1.41 |
|  | Node2 | 1.04 |  |
| 4.1.1.1 | Node1 | 0.40 | 0.36 |
|  | Node2 | 0.32 |  |

If the preset type includes all types of currently available Internet service providers, that is, the current scheduling allows cross-operator access, the scheduling decision center may screen service nodes ranked in the top, so that when a route fails or when load is heavy, screened service nodes with high quality may be used for replacement and recovery, to ensure the normal parsing and operation of a route.

If the preset type includes only a certain type of currently available Internet service providers, i.e., the current scheduling does not allow cross-operator access, the scheduling decision center needs to remove service nodes except the preset type, and then ranks the remaining service nodes. Moreover, when the route service information includes a level of each service node, the scheduling decision center may generate route scheduling information of the to-be-scheduled domain name according to the level of service nodes and the result of ranking. For example, when a low-level route fails, the parsing route may be gradually switched from a low-level route to a high-level route. For example, when Fujian Telecom 2.1.1.1 fails, it is preferentially switched to a route of China Telecom. When there is no route of China Telecom or the IPs under the China Telecom are all down, switch to a default route 1.1.1.1. When the default routes all fail, the parsing route may be automatically switched according to the ranking of the scored values of the resources.

It should be noted that, since the monitoring machine(s) monitors each service node according to the detection frequency, the resource scoring center may control the monitoring machine(s) to obtain more accurate and representative data when the detection frequency is about 2 minutes/once. Moreover, the resource scoring center may perform dynamic scoring of each service node in real time, which provides a basis for the scheduling decision center to subsequently generate more dynamic route scheduling information in real-time. In this way, the timeliness and flexibility in adjusting the domain name system are effectively ensured, so as to prevent the problem of timeliness delay caused by the optimization using the manual operation mode in the existing technologies.

It should be noted that when the scheduling decision center generates the route scheduling information of the to-be-scheduled domain name, the load value may be set for each service node included in the route scheduling information according to a scheduling mode preset by the technical staff. For example, if the preset scheduling mode is an active/standby scheduling mode, a first service node may serve as the active scheduling route, and a second service node may serve as the standby scheduling route. For example, if the preset scheduling mode is a load balancing mode, the service nodes that are ranked first and second each is in charge of 50% of the scheduled traffic load. In this way, dynamic load balancing and multi-level active/standby switching may be achieved.

Step 204: Publish the route scheduling information to a preset domain name server.

Specifically, the technical staff may input and save the address information of one or more domain name servers to the scheduling decision center in advance, so that the scheduling decision center may publish the route scheduling information to a preset domain name server according to the address information of the currently stored domain name servers, to allow the domain name server to implement the route scheduling information. This provides a basis for comprehensive coverage of route scheduling information.

It should be noted that, in the disclosed implementation, after the scheduling decision center publishes the route scheduling information to the respective domain name server, the route scheduling information may be also pushed to a preset terminal, to allow the technical staff to grasp more valid information in time. Here, the preset terminal may be a mobile phone, a computer, or a tablet of technical staff. The scheduling decision center may push the route scheduling information to the preset terminal through various channels, such as mail, SMS, WeChat, and internal communications. Moreover, the scheduling decision center may also inform a user the resource failure, resource switching, resource recovery, and other information.

For example, prompt information including the route scheduling information may exist in the following format. However, the following example of the prompt information is merely for illustrative purpose. In real operations, the technical staff may preset the prompt items included in the prompt information.

[Message Type]: scheduling switch
[Type of Strategy]: route scheduling
[Time of Event]: 2017-11-23 11:57:35
[Domain Name]: test.example.com
[Route]: default route
[Scheduling Information]: 1.1.1.1 replaces 2.1.1.1.

In the disclosed implementation, the technical staff may also set a timing for switch in the scheduling decision center, such as an immediate switch, a delayed switch, or a manual switch, so that the scheduling decision center determines the time for publishing the route scheduling information according to the timing for switch.

It is not difficult to understand that the scheduling decision center in the disclosed implementation is equivalent to a CDN network traffic distribution/scheduling system, which generates route scheduling information of a to-be-scheduled domain name according to the scored value of each service node corresponding to the to-be-scheduled domain name. The route scheduling information is published to a domain name server for execution, thereby achieving the objective of real-time route tuning and optimization and rational resource allocation. In this way, the technical staff only needs to create a simple domain name configuration table (as shown in Table 1), the scheduling system then is able to evaluate the advantages and disadvantages of each service node. Accordingly, the optimal route scheduling information may be automatically generated for comprehensive network coverage, so as to eliminate the need for excessive personnel intervention and operation. At the moments that the service quality is effectively ensured, the human and financial resources of enterprises may be saved, and the operation and maintenance costs may be effectively controlled.

Implementation 3 of the present disclosure relates to a method for scheduling a domain name system. Implementation 3 of the present disclosure is substantially similar to Implementation 2. The main difference is that Implementation 3 of the present disclosure is applicable to a situation of mixed CDN scheduling across CDNs. Implementation 3 is specifically described as follows:

The specific steps of the scheduling method in Implementation 3 are the same as those in Implementation 2. The main difference is the specific implementation forms of each step, which is specifically described below.

Step 201: Obtain a to-be-scheduled domain name and route service information corresponding to the to-be-scheduled domain name.

Specifically, the technical staff sends the to-be-scheduled domain name and the route service information corresponding to the to-be-scheduled domain name to the scheduling decision center. The route service information includes at least address information of a plurality of service nodes, where a service node may be an acceleration service node. For example, the address information of a service node may be a CNAME address of a certain CDN node.

More specifically, the route service information may further include information such as a geographic location, an Internet service provider of each service node, and the like. For example, the to-be-scheduled domain name and the route service information corresponding to the to-be-scheduled domain name obtained by the scheduling decision center may be as shown in the following example:

Example 2: The to-be-scheduled domain name is cdn.example.com; and the route service information is as follows:

| Internet Service Provider | Geographic Location | Acceleration Service Node Address Information (CNAME) |
| --- | --- | --- |
| Fujian Telecom | Fujian | CDN1 |
| Fujian Telecom | Fujian | CDN2 |
| Fujian Telecom | Fujian | CDN3 |

Here, CDN1, CDN2, and CDN3 represent the address information of respective network traffic distribution/scheduling system of three CDN service providers. The above Table 2 indicates that the content provider for the domain name cdn.example.com needs to use CDN1, CDN2, and CDN3 service providers for mixed acceleration.

Step 202: Obtain scored values of a plurality of service nodes included in the route service information.

The specific implementation of this step is the same as that of Implementation 2. That is, the scheduling decision center sends the address information of a plurality of service nodes included in the route service information to the resource scoring center in Implementation 1, so that the resource scoring center scores the plurality of service nodes included in the route service information, and return the scored value of each service node to the scheduling decision center.

Step 203: Generate route scheduling information of the to-be-scheduled domain name according to the scored value of each service node.

Assume that two monitoring devices Node1 and Node2 are deployed, and the data for each acceleration service node is as follows:

| Address Information (CNAME) | Monitoring Machine | Response Time | Download Speed |
| --- | --- | --- | --- |
| CDN1 | Node1 | 40 ms | 2500 k/s |
| | Node2 | 60 ms | 2000 k/s |
| CDN2 | Node1 | 100 ms | 1250 k/s |
| | Node2 | 120 ms | 1000 k/s |
| CDN3 | Node1 | 200 ms | 800 k/s |
| | Node2 | 250 ms | 600 k/s |

If the preset to is 100 ms and vo is 1250 k/s, the scoring table of each acceleration service node is as follows:

| Address information (CNAME) | Monitoring Machine | Score | Final Score |
| --- | --- | --- | --- |
| CDN1 | Node1 | 5 | 3.84 |
| | Node2 | 2.67 | |
| CDN2 | Node1 | 1 | 0.84 |
| | Node2 | 0.67 | |

(continued)

| Address information (CNAME) | Monitoring Machine | Score | Final Score |
|---|---|---|---|
| CDN3 | Node1 | 0.32 | 0.26 |
| | Node2 | 0.19 | |

Next, based on the above scoring information, the scheduling decision center may rank each acceleration service node according to the scored values of the resources, and the route scheduling information may be set according to the preset number of acceleration service nodes. For example, when the preset number is 1, in Fujian Telecom, CDN1 is preferred. If the preset number is 2, in Fujian Telecom, CDN1 and CDN2 are preferred.

Step 204: Publish the route scheduling information to a preset domain name server.

The specific implementation of this step is the same as that of Implementation 2. To prevent repetition, details of the implementation are not described again here.

It is not difficult to understand that the scheduling decision center in Implementation 3 is equivalent to a network traffic distribution/scheduling system across CDNs, and is applicable to mixed CDN scheduling (i.e., across-CDN scheduling). This scheduling method generates route scheduling information of the to-be-scheduled domain name based on the scores of service nodes corresponding to the to-be-scheduled domain name, and publishes the route scheduling information to a domain name server for execution, so that the objective of dynamic optimal selection of service nodes according to the acceleration quality of each CDN may be achieved, and route tuning and optimization and rational resource allocation may be implemented in real time. Moreover, without excessive personnel intervention and operation, the human and financial resources of enterprises are greatly saved, and the operation and maintenance costs are controlled.

The steps of the above various methods are divided merely for the purpose of clear description. During the implementations, these steps may be combined into one step or certain steps may be split and decomposed into multiple steps, all of which should fall within the protection scope of the present disclosure as long as the same logical relationship is incorporated. The addition of insignificant modifications or the introduction of insignificant designs to an algorithm or process without changing the essential design of the algorithm and process shall also fall within the protection scope of the present disclosure.

Implementation 4 of the present disclosure relates to a server. As shown in FIG. 3, the server includes: at least one processor 301, and a memory 302 communicably coupled to the at least one processor 301; where the memory 302 stores instructions executable by the at least one processor 301 to cause the at least one processor 301 to implement the methods for scheduling a domain name system in the above-described method-related implementations.

The memory 302 and the processor 301 are connected by a bus. The bus may include any number of interconnected buses and bridges that connect various circuits of the processor 301 and the memory 302. The bus may also connect various other circuits, such as peripherals, voltage regulator, and power management circuit, as is well known in the art, and therefore, will not be further described again here. A bus interface provides an interface between the bus and a transceiver. The transceiver may be an element or a plurality of elements, such as a plurality of receivers and transmitters, which provide means for communicating with various other devices on a transmission medium. The data processed by the processor 301 is transmitted over wireless medium via an antenna. Further, the antenna also receives data and transmits data to the processor 301.

The processor 301 is responsible for managing the bus and normal processing, and may also provide various functions including timing, peripheral interfaces, voltage regulation, power management, and other control functions. The memory 302 may be used to store data used by the processor 301 in implementing certain operations.

Compared with the existing technologies, the implementations of the present disclosure provide a basis for achieving a tuning and optimization of a parsing route and rational resource allocation. Moreover, the scheduling of a domain name system is achieved without excessive personnel intervention and operation, which saves the human and financial resources of enterprises and effectively controls the operation and maintenance costs.

Implementation 5 of the present disclosure relates to a computer-readable storage medium storing a computer program that, when executed by a processor, implements the above-described method-related implementations.

Compared with the existing technologies, the implementations of the present disclosure provide a basis for achieving a tuning and optimization of a parsing route and rational resource allocation. Moreover, the scheduling of a domain name system is achieved without excessive personnel intervention and operation, which saves the human and financial resources of enterprises and effectively controls the operation and maintenance costs.

Those skilled in the art may understand that all or part of the steps for implementing the above implementations may be achieved by a program instructing related hardware. The program is stored in a storage medium and includes a plurality of instructions for enabling a device (which may be a microcontroller, a chip, etc.) or a processor to implement all or part of steps of the methods described in the various implementations of the present disclosure. The storage medium includes: a flash drive, a mobile hard drive, a read-only memory (ROM), a random access memory (RAM), a magnetic disk, or an optical disk, etc.

A person skilled in the art may understand that the above implementations are merely specific implementations for implementing the present disclosure.

**Claims**

1. A method for scoring a service node, comprising:

    obtaining (101) address information of the service node;
    monitoring the service node according to the address information of the service node, and obtaining (1022, 1025) a plurality of performance evaluation information of the service node; and
    scoring (1023; 1026) the service node according to the plurality of performance evaluation information;
    wherein monitoring the service node according to the address information of the service node, and obtaining a plurality of performance evaluation information of the service node further include:

        if the address information of the service node is a Canonical Name Record, CNAME, address (1021), obtaining (1022) resource response time and a download speed of the service node;
        if the address information of the service node is an Internet Protocol, IP, address, (1024) obtaining (1025) resource response time, a bandwidth usage, and a resource memory load of the service node.

2. The method according to claim 1, wherein:
    scoring the service node according to the plurality of performance evaluation information further includes:
    calculating a scored value of the service node according to a formula $T = (t_0/t) * (v/v_0)$, wherein T is the scored value, t is the resource response time, $t_0$ is preset resource response time, v is the download speed, and vo is a preset download speed.

3. The method according to claim 1, wherein:
    scoring the service node according to the plurality of performance evaluation information further includes:
    calculating a scored value of the service node according to a formula $T = (t_0 / t)*(n / n_0)*(z / z_0)$, wherein T is the scored value, t is the resource response time, $t_0$ is preset resource response time, n is the bandwidth usage, $n_0$ is a preset bandwidth usage, z is the resource memory load, and $z_0$ is a preset resource memory load.

4. The method according to claim 3, wherein obtaining the resource memory load of the service node further includes:

    obtaining a Central Processing Unit, CPU, usage, a memory usage, and a disk occupancy; and

    calculating the resource memory load of the service node according to a formula: $z = \sqrt[3]{(aA_1)*(bA_2)*(cA_3)}$,
    wherein z is the resource memory load, $A_1$ is the CPU usage, $A_2$ is the memory usage, $A_3$ is the disk occupancy, a is a preset weight of the CPU usage, b is a preset weight of the memory usage, and c is a preset weight of the disk occupancy.

5. The method according to claim 1, further includes:

    obtaining (201) a to-be-scheduled domain name and route service information corresponding to the to-be-scheduled domain name, wherein the route service information includes address information of a plurality of service nodes;
    scoring (202) the plurality of service nodes by using a method for scoring a service node;
    generating (203) route scheduling information of the to-be-scheduled domain name according to a scored value of each of the plurality of service nodes; and
    publishing (204) the route scheduling information to a preset domain name server to allow the preset domain name server to execute the route scheduling information.

6. The method according to claim 5, wherein generating the route scheduling information of the to-be-scheduled domain name according to a scored value of each of the plurality of service nodes further includes:

ranking each service node that satisfies route filtering criteria according to an order of high-to-low of scored values; and

generating the route scheduling information of the to-be-scheduled domain name according to a result of ranking.

7. The method according to claim 6, wherein the route filtering criteria include one or a combination of:
a scored value of a service node being larger than a preset threshold, and a type to which an Internet service provider of a service node belongs being a preset type.

8. The method according to claim 5, wherein, after publishing the route scheduling information to the preset domain name server, the method further includes:
pushing prompt information including the route scheduling information to a preset terminal.

9. A server, comprising:

at least one processor (301); and
a memory (302) communicably coupled to the at least one processor, wherein:
the memory stores instructions executable by the at least one processor, and the instructions, when executed by the at least one processor, cause the at least one processor to implement a method for scheduling a domain name system, the method including:

obtaining a to-be-scheduled domain name and route service information corresponding to the to-be-scheduled domain name, wherein the route service information includes address information of a plurality of service nodes,
scoring the plurality of service nodes by using a method for scoring a service node, wherein the method for scoring a service node includes:

obtaining address information of the service node,
monitoring the service node according to the address information of the service node, and obtaining a plurality of performance evaluation information of the service node, and
scoring the service node according to the plurality of performance evaluation information,

generating route scheduling information of the to-be-scheduled domain name according to a scored value of each of the plurality of service nodes, and
publishing the route scheduling information to a preset domain name server to allow the preset domain name server to execute the route scheduling information;
wherein monitoring the service node according to the address information of the service node, and obtaining a plurality of performance evaluation information of the service node further include:

if the address information of the service node is a Canonical Name Record, CNAME, address, obtaining resource response time and a download speed of the service node;
if the address information of the service node is an Internet Protocol, IP, address, obtaining resource response time, a bandwidth usage, and a resource memory load of the service node.

10. The method according to claim 5, wherein, monitoring the service node according to the address information of the service node further includes:
monitoring the service node according to a detection frequency.

11. The method according to claim 5, wherein, generating the route scheduling information of the to-be-scheduled domain name according to the scored value of each of the plurality of service nodes further includes:
setting a load value for each service node included in the route scheduling information according to a preset scheduling mode.

12. The method according to claim 7, wherein, if the Internet service provider of a service node includes all types of currently available Internet service providers, one or more service nodes ranked in the top may be selected for replacement and recovery purpose.

13. The method according to claim 7, wherein, if the Internet service provider of a service node includes a certain type of currently available Internet service providers, service nodes except the preset type are excluded, and the remaining service nodes are ranked.

**Patentansprüche**

1. Eine Methode zur Bewertung eines Dienstknotens, die Folgendes umfasst:

   Erhalt (101) von Adresseninformation des Dienstknotens;
   Kontrolle des Dienstknotens gemäss der Adresseninformation des Dienstknotens und Erhalt (1022, 1025) einer Vielzahl von Leistungsauswertungsinformationen des Dienstknotens;
   und
   Bewertung (1023; 1026) des Dienstknotens gemäss einer Vielzahl von Leistungsauswertungsinformationen;
   Methode, bei der die Kontrolle des Dienstknotens gemäss der Adresseninformation des Dienstknotens und der Erhalt einer Vielzahl von Leistungsauswertungsinforamtion des Dienstknotens weiter Folgendes einschliesst:

   Wenn die Adresseninformation des Dienstknotens eine gespeicherte, kanonische Namensdatensatzadresse (1021), *CNAME,* ist, Erhalt (1022) der Ressourcen-Ansprechzeit und einer Herunterladungsgeschwindigkeit des Dienstknotens;
   wenn die Adresseninformation des Dienstknotens eine Internetprotokoll -IP-Adresse (1024) ist, Erhalt (1025) der Ressourcen-Ansprechzeit, der Bandbreitennutzung und einer Ressourcen-Speicherbelastung des Dienstknotens.

2. Die Methode gemäss Anspruch 1, bei der
   die Bewertung des Dienstknotens entsprechend einer Mehrzahl von Leistungsauswertungsinformationen weiter Folgendes einschliesst:
   Berechnung eines Bewertungswertes des Dienstknotens gemäss einer Formel $T = (t_o/t)*(v)v_o)$, in der T der Bewertungswert, t die Ressourcen-Ansprechszeit, $T_o$ eine vorgegebene Ressourcen-Ansprechzeit, v die Herunterladungsgeschwindigkeit und $v_o$ eine vorgegebene Herunterladungsgeschwindigkeit ist.

3. Die Methode gemäss Anspruch 1, bei der:
   Die Bewertung des Dienstknotens entsprechend einer Mehrzahl von Leistungsauswertungsinformationen weiter Folgendes einschliesst:
   Berechnung eines Bewertungswertes des Dienstknotens entsprechend einer Formel $T = (t_o/t)*(n)n_o)*(z/z_o)$, bei der T der Bewertungswert, t die Ressourcen-Ansprechzeit, $t_o$ eine vorgegebene Ressourcen-Ansprechzeit, n die Bandbreitennutzung, $n_o$ eine vorgegebene Bandbreitennutzung, z die Ressourcen-Speicherbelastung und $z_o$ eine vorgegebene Ressourcen-Speicherbelastung ist.

4. Die Methode gemäss Anspruch 3, bei der der Erhalt der Ressourcen-Speicherbelastung des Dienstknotens weiter Folgendes einschliesst:

   Erhalt eines Zentraleinheits(CPU)-gebrauchs, eines Speichergebrauchs und einer Platteninanspruchnahme;
   Berechnung der Ressourcen-Speicherbelastung des Dienstknotens entsprechend der Formel:

$$z = \sqrt[3]{(aA_1)*(bA_2)*(cA_3)},$$

   bei der z die Ressourcen-Speicherbelastung, $A_1$ der CPU-Gebrauch, $A_2$ der Speichergebrauch, $A_3$ die Platteninanspruchnahme, a ein vorgegebener Umfang des CPU-Gebrauchs, b ein vorgegebener Umfang des Speichergebrauchs und c ein vorgegebener Umfang der Platteninapsnruchnahme ist.

5. Die Methode gemäss Anspruch 1, die weiter Folgendes einschliesst:

   Erhalt (201) eines zu planenden Domännamens und der dem zu planenden Domännamen entsprechenden Routen-Dienst-Information, wobei die Routen-Dienst-Information Adresseninformation von einer Vielzahl von Dienstknoten einschliesst;
   Bewertung (202) der Vielzahl von Dienstknoten unter Anwendung einer Methode für die Bewertung eines Dienstknotens;

Erzeugung (203) Routen-Planungsinformationen von dem zu planenden Domännamen übereinstimmend mit einem Bewertungswert eines jeden der vielzähligen Dienstknotens; und

Herausgabe (204) der Routen-Planungsinformation an einen vorgegebenen Domännamenserver, um dem vorgegebenen Domännamenserver die Ausführung der Routen-Planungsinformation zu ermöglichen.

6. Die Methode gemäss Anspruch 5, bei der die Erzeugung der Routen-Planungsinformation des zu planenden Domännamens gemäss einem Bewertungswert von jedem der vielzähligen Dienstknoten weiter Folgendes einschliesst:

Rangordnung eines jeden Dienstknotens, der die Kriterien für die Routen-Filterung erfüllt, übereinstimmend mit einer Einordnung von hoch-bis-niedrig von Bewertungswerten; und

Erzeugung der Routen-Planungsinformation des zu planenden Domännamens übereinstimmend mit dem Rangordnungsergebnis.

7. Die Methode gemäss Anspruch 6, bei der die Routenfilterungskriterien eins oder eine Kombination von Folgenden einschliessen:

Ein Bewertungswert eines Dienstknotens, der grösser ist als ein vorgegebener Schwellwert, und ein Typ, der ein vorgegebener Typ ist,

zu dem ein Internetdienstanbieter eines Dienstknotens gehört,

8. Die Methode gemäss Anspruch 5, wobei nach Herausgabe der Routenplanungsinformation an den vorgegenen Domännamenserver die Methode weiter Folgendes einschliesst:

Pushing von Anforderungsinformation einschliesslich der Routenplanungsinformation an ein vorgegebenes Terminal.

9. Ein Server, der Folgendes umfasst:

Mindestene einen Prozessor (301); und

einen Speicher (302) der kommunikativ mit mindestens einem Prozessor gekoppelt ist, wobei:

der Speicher Anweisungen speichert, die durch mindestens einen Prozessor ausgeführt werden, und die Anweisungen veranlassen mindestens einen Prozessor, eine Methode für die Planung eines Domännamenssystems zu implementieren, wenn sie mindestens durch einen Prozessor ausgeführt werden, wobei die Methode Folgendes einschliesst:

Erhalt des zu planenden Domännamens und der dem zu planenden Domännamen entsprechenden Routendienstinformation, wobei die Routendienstinformation Adresseninformation von viezähligen Dienstknoten einschliesst,

Bewertung der vielzähligen Dienstknoten unter Anwendung der Methode für die Bewertung von Dienstknoten,

wobei die Methode für die Bewertung eines Dienstknotens Folgendes einschliesst:

Erhalt von Adresseninformation des Dienstknotens,

Kontrolle des Dienstknotens übereinstimmend mit der Adresseninformation des Dienstknotens, und Erhalt einer Vielzahl von Leistungsauswertungsinformationen des Dienstknotens, und

Bewertung des Dienstknotens entsprechend der Vielzahl von Leistungsauswertungsinformationen,

Erzeugung von Routenplanungsinformation des zu planenden Domännamens gemäss einem Bewertungswert von jedem der vielzähligen Dienstknoten, und

Herausgabe der Routenplanungsinformation an einen vorgegebenen Domännamenserver, um dem vorgegebenen Domännamenserver die Ausführung der Routenplanungsinformation zu erlauben;

wobei die Kontrolle des Dienstknotens übereinstimmend mit der Adresseninformaion des Dienstknotens und der Erhalt von vielzähligen Leistungsauswertungsinformationen des Dienstknotens weiter Folgendes einschliessen;

wenn die Adresseninformation vom Dienstknoten eine kanonische NamensDatensatzadresse, *CNAME,* ist, Erhalt der Ressourcen-Ansprechzeit und einer Herunterladungsgeschwindigkeit des Dienstknotens;

wenn die Adresseninformation des Dienstknotens eine Internet-Protokoll(IP)-Adresse ist, Erhalt der Ressourcen-Ansprechzeit, eines Bandbreitengebrauchs und einer Ressourcenspeicherbelastung des Dienstknotens.

10. Die Methode gemäss Anspruch 5, bei der die Kontrolle des Dienstknotens übereinstimmend mit der Adresseninformation des Dienstknotens weiter Folgendes einschliesst:
Kontrolle des Dienstknotens übereinstimmend mit einer Erfassungsfrequenz.

11. Die Methode gemäss Anspruch 5, bei der die Erzeugung der Routenplanungsinformation des zu planenden Domännamens übereinstimmend mit dem Bewertungswert eines jeden der vielzähligen Dienstknotens weiter Folgendes einschliesst:
Festlegung eines Belastungswertes für jeden, in der Routenplanungsinformation eingeschlossenen Dienstknoten übereinstimmend mit einem vorgegebenen Planungsmodus.

12. Die Methode gemäss Anspruch 7, bei der der Internetdienstanbieter eines Dienstknotens alle Arten von gegenwärtig verfügbaren Internetdienstanbietern einschliesst, ein oder mehrere Dienstknoten in der oberen Rangordnung zum Ersatz und für Wiederherstellungszwecke gewählt werden kann/können.

13. Die Methode gemäss Anspruch 7, bei der der Internetdienstanbieter eines Dienstknotens eine bestimmte Art von gegenwärtig verfügbaren Internetdienstanbietern einschliesst, Dienstknoten ausgeschlossen sind, ausgeschlossen der vorgegebene Typ, und die restlichen Dienstknoten eine Rangordnung haben.

## Revendications

1. Une méthode de notation d'un nœud de service comprenant les pas suivants :

   obtenir (101) l'information d'adresse du nœud de service;
   contrôler le nœud de service conformément à l'information d'adresse du nœud de service et obtenir (1022, 1025) une série de données d'évaluation du rendement du nœud de service; et
   noter (1023; 1026) le nœud de service conformément à la série de données d'évaluation du rendement;
   où le contrôle du nœud de service, conformément à l'information d'adresse du nœud de service, et l'obtention de la série de données d'évaluation du rendement du nœud de service, comprennent en outre les pas suivants:

   si l'information d'adresse du nœud de service correspond à une adresse du type CNAME (Canonical Name Record) (1021), obtenir (1022) le temps de réponse des ressources et la vitesse de téléchargement du nœud de service;
   si l'information d'adresse du nœud de service correspond à une adresse IP (Internet Protocol) (1024), obtenir (1025) le temps de réponse des ressources, l'utilisation de la bande passante et une charge mémoire des ressources du nœud de service.

2. La méthode conformément à la revendication 1, où:
la notation du nœud de service conformément à la série de données d'évaluation du rendement comprend en outre les pas suivants:
calculer une valeur de notation du nœud de service, conformément à la formule: $T=(t_0/t)*(v/v_0)$, où $T$ est la valeur notée; $t$ est le temps de réponse des ressources ; $t_0$ est un temps de réponse des ressources prédéfini; $v$ est la vitesse de téléchargement ; et $v_0$ est une vitesse de téléchargement prédéfinie.

3. La méthode conformément à la revendication 1, où:
la notation du nœud de service conformément à la série de données d'évaluation du rendement comprend en outre les pas suivants:
calculer une valeur de notation du nœud de service, conformément à la formule: $T=(t_0/t)*(n/n_0)*(z/z_0)$ où $T$ est la valeur notée; $t$ est le temps de réponse des ressources; $t_0$ est un temps de réponse des ressources prédéfini; $n$ est l'utilisation de la bande passante; $n_0$ est une utilisation de la bande passante prédéfinie; $z$ est la charge mémoire des ressources; et $z_0$ est une charge mémoire des ressources prédéfinie.

4. La méthode conformément à la revendication 3, où l'obtention de la charge mémoire des ressources du nœud de service comprend en outre les pas suivants:

   obtenir l'utilisation de l'unité centrale de traitement (CPU), l'utilisation de la mémoire et l'occupation du disque; et
   calculer la charge mémoire des ressources du nœud de service, conformément à la formule suivante :

$$z = \sqrt[3]{(aA_1) * (bA_2) * (cA_3)}$$ , où z est la charge mémoire des ressources; $A_1$ est l'utilisation de la CPU; $A_2$ est l'utilisation de la mémoire; $A_3$ est l'occupation du disque; a est une pondération prédéfinie de l'utilisation de la CPU; b est une pondération prédéfinie de l'utilisation de la mémoire; et c est une pondération prédéfinie de l'occupation du disque.

**5.** La méthode conformément à la revendication 1, comprenant en outre les pas suivants:

obtenir (201) un nom de domaine à planifier et une information de service d'acheminement correspondant au nom de domaine à planifier, où l' information de service d'acheminement comprend l'information d'adresse d'une série de nœuds de service;
noter (202) la série de nœuds de service selon une méthode de notation d'un nœud de service;
générer (203) l'information de planification d'acheminement du nom de domaine à planifier conformément à une valeur de notation de chaque série de nœuds de service; et
publier (204) l'information de planification d'acheminement vers un serveur de noms de domaines prédéfini pour permettre au serveur de noms de domaines prédéfini d'exécuter l'information de planification d'acheminement.

**6.** La méthode conformément à la revendication 5, où la génération de l'information de planification d'acheminement du nom de domaine à planifier, conformément à une valeur notée de chaque série de de nœuds de service, comprend en outre las pas suivants:

classifier chaque nœud de service qui remplit les critères de filtrage d'acheminement selon un ordre d'élevé à bas des valeurs notées; et
générer l'information de planification d'acheminement du nom de domaine à planifier, conformément au résultat de la classification.

**7.** La méthode selon la revendication 6, dans lequel les critères de filtrage d'acheminement comprennent un ou une combinaison de:
une valeur notée d'un nœud de service étant plus grande que un seuil prédéfinie, et un type auquel appartient un fournisseur de services Internet d'un nœud de service étant un type prédéfini.

**8.** La méthode conformément à la revendication 5, où, après avoir publié l'information de planification d'acheminement vers le serveur de noms de domaines prédéfinis, elle comprend en outre les pas suivants:
pousser les données obtenues, comprenant l'information de planification d'acheminement, vers un terminal prédéfini.

**9.** Un serveur comprenant:

au moins un processeur (301); et
une mémoire (302) couplée de manière communicante à au moins un processeur, où:
la mémoire stocke les instructions exécutables par au moins un processeur, et les instructions, une fois exécutées par au moins un processeur, font qu'au moins un processeur mette en place une méthode pour planifier un système de noms de domaines, la méthode comprenant en outre les pas suivants:

obtenir un nom de domaine à planifier et une information de service d'acheminement correspondant au nom de domaine à planifier, où l'information de service d'acheminement comprend l'information d'adresse d'une série de nœuds de service,
la notation d'une série de nœuds de service en utilisant une méthode de notation de nœuds de service;
où la méthode de notation de nœuds de service comprend les pas suivants:

obtenir l'information d'adresse du nœud de service;
contrôler le nœud de service conformément à la méthode de notation de nœuds de service; et obtenir une série de donnés d'évaluation du rendement du nœud de service; et
noter le nœud de service conformément à la série de donnés d'évaluation du rendement du nœud de service;

générer l'information de planification d'acheminement du nom de domaine à planifier conformément à la valeur notée de chaque série de nœuds de service; et

publier l'information de planification d'acheminement vers un serveur de noms de domaines prédéfini pour permettre au serveur de noms de domaines prédéfini d'exécuter l'information de planification d'acheminement;

où le contrôle du nœud de service conformément à l'information d'adresse du nœud de service et l'obtention d'une série de données d'évaluation du rendement du nœud de service comprennent en outre les pas suivants:

si l'information d'adresse du nœud de service correspond à une adresse du type CNAME (Canonical Name Record), obtenir le temps de réponse des ressources et la vitesse de téléchargement du nœud de service; si l'information d'adresse du nœud de service correspond à une adresse IP, Internet Protocol, obtenir le temps de réponse des ressources, l'utilisation de la bande passante et une charge mémoire des ressources du nœud de service.

10. La méthode conformément à la revendication 5, où le contrôle du nœud de service conformément à l'information d'adresse du nœud de service comprend en outre le pas suivant:
contrôler le nœud de service conformément à une fréquence de détection.

11. La méthode conformément à la revendication 5, où la génération de l'information de planification d'acheminement du nom de domaine à planifier, conformément à la valeur notée de chaque série de nœuds de service, comprend en outre le pas suivant:
définir une valeur de charge pour chaque nœud de service compris dans l'information de planification d'acheminement conformément à un mode de planification prédéfini.

12. La méthode conformément à la revendication 7, où, si le fournisseur de services Internet d'un nœud de service comprend tous les types de fournisseurs de services Internet disponibles, un ou plusieurs nœuds de service classés parmi les premiers peuvent être sélectionnés pour remplacement en cas de récupération.

13. La méthode conformément à la revendication 7, où, si le fournisseur de services Internet d'un nœud de service comprend un certain type de fournisseurs de services Internet disponibles, les nœuds de service, sauf le type prédéfini, sont exclus, et le reste des nœuds de service sont classifiés.

**FIG. 1**

Start

Obtain to-be-scheduled domain name and route service information corresponding to to-be-scheduled domain name

201

Obtain scored values of a plurality of service nodes included in route service information

202

Generate route scheduling information of to-be-scheduled domain name according to scored value of each service node

203

Publish route scheduling information to preset domain name server

204

End

**FIG. 2**

| Processor(s) | | Memory |
|---|---|---|

301

302

**FIG. 3**

**EP 3 629 521 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20180026938 A1
- US 2010088405 A1
- US 2017134253 A1